# EUROPEAN PATENT APPLICATION

(11) **EP 4 089 294 A1**
(43) Date of publication of application: **16.11.2022**
(21) Application number: 21726030.6
(22) Date of filing: 23.04.2021
(51) Int. Cl.: F16C 29/00, B01D 53/047, F16C 32/06, F16C 29/02

(54) **NEGATIVE-PRESSURE ADSORPTION STATIC-PRESSURE SUPPORTING GUIDE RAIL OF MACHINING MACHINE TOOL, AND CYLINDRICAL GRINDING MACHINE COMPRISING NEGATIVE-PRESSURE ADSORPTION STATIC-PRESSURE SUPPORTING GUIDE RAIL**

(30) Priority: 29.03.2021 CN 202110335402
(71) Applicant: Hiecise Precision Equipment (Kunshan) Co., Ltd., Kunshan, Jiangsu 215337 (CN)
(72) Inventor: CAO, Yuzhong, Kunshan, Jiangsu 215337 (CN); CHEN, Junchuang, Kunshan, Jiangsu 215337 (CN); DING, Xijie, Kunshan, Jiangsu 215337 (CN); MEI, Zhiyi, Kunshan, Jiangsu 215337 (CN); WANG, Xidong, Kunshan, Jiangsu 215337 (CN); WANG, Chao, Kunshan, Jiangsu 215337 (CN); AO, Ziming, Kunshan, Jiangsu 215337 (CN); YANG, Qingsheng, Kunshan, Jiangsu 215337 (CN)
(74) Representative: Herzog IP Patentanwalts GmbH
(86) International application number: PCT/CN2021/089395
(87) International publication number: WO 2022/205542

(57) **Abstract**

The present disclosure provides a negative pressure adsorption and static pressure support guide rail of machine process tool, the machine process tool comprises a workbench and a machine tool, the negative pressure adsorption and static pressure support guide rail comprises a guide rail groove, a guide rail body and static pressure support components, the guide rail groove is fixedly set on a lower side surface of the workbench, the guide rail body is fixedly set on an upper side surface of the machine tool, and the guide rail groove is correspondingly set with the guide rail body. In the present disclosure, the guide rail groove and the guide rail body are in a pure liquid friction state through the static pressure support components, so that the present disclosure has the advantages of high motion accuracy and low friction resistance, etc.

## Description

### FIELD OF THE INVENTION

The present disclosure relates to the field of machine process, in particular to a negative pressure adsorption and static pressure support guide rail of machine process tool and cylindrical grinder comprising the guide rail.

### BACKGROUND OF THE INVENTION

At present, in order to reduce the friction of moving parts, a guide rail structure with high moving accuracy and low friction resistance is generally used in most machine equipment. At the same time, it is better to have the advantages of long service life and good anti-vibration performance. In the existing technology of static pressure guide rail, lubricating oil with certain pressure is inputted into the oil chamber on the surface of the guide rail body through capillary restrictor or orifice restrictor to form a bearing oil film, which makes the surfaces of the guide rail body are in a pure liquid friction state each other. However, it also has the problems of motion drift and instability, which limits its application.

### SUMMARY OF THE INVENTION

In order to solve at least one technical problem in the above prior art, the present disclosure provides a negative pressure adsorption and static pressure support guide rail of machine process tool and cylindrical grinder comprising the guide rail.

According to a negative pressure adsorption and static pressure support guide rail of machine process tool, the machine process tool comprises a workbench and a machine tool, the negative pressure adsorption and static pressure support guide rail comprises a guide rail body and static pressure support components, the guide rail body is fixedly set on an upper side surface of the machine tool, and a guide rail groove matched with the guide rail body is set on a lower side surface of the workbench; and the static pressure support components are fixedly connected to the workbench and the guide rail groove is movably connected to the guide rail body through the static pressure support components.

In detail, the static pressure support components comprise static pressure oil chamber components on lateral guide rail, main bearing static pressure oil chamber and oil supply system; the static pressure oil chamber components on lateral guide rail are set on a side surface of the guide rail groove and the static pressure oil chamber components on lateral guide rail are correspondingly set with a side surface of the guide rail body; a plurality of main bearing static pressure oil chambers are set on a bottom surface of the guide rail groove and the main bearing static pressure oil chambers are correspondingly set with a top surface of the guide rail body; and both the static pressure oil chamber components on lateral guide rail and the main bearing static pressure oil chambers are connected to an oil outlet end of the oil supply system through a static pressure oil circuit.

Optionally, the static pressure oil circuit is set in the workbench and a PM flow controller is set between an oil inlet end of the static pressure oil circuit and the oil outlet end of the oil supply system.

In detail, the static pressure oil chamber components on lateral guide rail comprise a plurality of static pressure oil chambers on lateral guide rail and a resultant force of the plurality of static pressure oil chambers on lateral guide rail on the side surface of the guide rail body is zero.

In detail, a width of the guide rail groove is greater than a width of the guide rail body and a depth of the guide rail groove is greater than a height of the guide rail body.

Optionally, distance between two adjacent main bearing static pressure oil chambers is equal and areas of the plurality of main bearing static pressure oil chambers are equal.

Further, the workbench is also provided with negative pressure adsorption components, the negative pressure adsorption components adsorb the guide rail body based on negative pressure, so that a relative movement between the workbench and the guide rail body is stable.

In detail, the negative pressure adsorption components comprise negative pressure ring groove and negative pressure system, the negative pressure ring groove is fixedly set on the bottom surface of the guide rail groove 1 and the negative pressure ring groove is connected to a negative pressure end of the negative pressure system through a gas circuit.

Optionally, the negative pressure ring groove is set between the static pressure oil chamber components on lateral guide rail and the main bearing static pressure oil chambers, and the negative pressure ring groove near the side surface of the guide rail groove is set on a periphery of the main bearing static pressure oil chambers.

A cylindrical grinder, comprises the above negative pressure adsorption and static pressure support guide rail of machine process tool.

According to at least one embodiment of the present disclosure, the guide rail body and the guide rail groove are in a pure liquid friction state through the static pressure support components, so that the present disclosure has the advantages of high motion accuracy and low friction resistance, etc. By setting the negative pressure adsorption components, the problems of drift when moving in high speed and creep when moving in low speed of the static pressure guide rail can be solved when the high motion accuracy and low friction resistance are ensured and the stability of the machine process tool when moving and the machining precision of the workpiece can be improved.

### BRIEF DESCRIPTION OF THE DRAWINGS

The accompanying drawings illustrate exemplary embodiments of the present disclosure and, together with its description, are used to explain the principles of the present disclosure, which are included to provide a further understanding of the present disclosure, and are included in and form a part of the specification.
Figure 1 is a structure diagram of a negative pressure adsorption and static pressure support guide rail of machine process tool according to the present disclosure.
Figure 2 is a partial enlarged schematic diagram of Figure 1.
Figure 3 is a sectional view of static pressure oil chamber components on lateral guide rail according to the present disclosure.

In the figures: 1- guide rail groove, 2- static pressure oil chamber components on lateral guide rail, 3- main bearing static pressure oil chamber, 4- negative pressure ring groove, 5- static pressure oil chamber on lateral guide rail, and 6- static pressure oil circuit.

### DETAILED DESCRIPTION OF THE INVENTION

The present disclosure will be further described in detail below in conjunction with the drawings and embodiments. It can be understood that the specific embodiments described here are only used to explain related content, but not to limit the present disclosure. In addition, it should be noted that, for ease of description, only the parts related to the present disclosure are shown in the drawings.

It should be noted that the embodiments in the present disclosure and the features in the embodiments can be combined with each other if there is no conflict. Hereinafter, the present disclosure will be described in detail with reference to the drawings and in conjunction with the embodiments.

The present disclosure provides a negative pressure adsorption and static pressure support guide rail of machine process tool. The machine process tool comprises a workbench and a machine tool, the negative pressure adsorption and static pressure support guide rail comprises a guide rail body and static pressure support components, the guide rail body is fixedly set on the upper side surface of the machine tool, and a guide rail groove 1 matched with the guide rail body is set on the lower side surface of the workbench; and the static pressure support components are fixedly connected to the workbench, and the guide rail groove 1 is movably connected to the guide rail body through the static pressure support components.

The workbench and the machine tool are slidably connected through the support guide rail. A bearing oil film is formed between the guide rail groove 1 and the guide rail body through the static pressure support components, so that the guide rail groove 1 and the guide rail body are in a pure liquid friction state, which has the advantages of high moving accuracy and low friction resistance, etc.

The static pressure support components comprise static pressure oil chamber components on lateral guide rail 2, main bearing static pressure oil chamber 3 and oil supply system. The static pressure oil chamber components on lateral guide rail 2 are set on the side surface of the guide rail groove 1 and the static pressure oil chamber components on lateral guide rail 2 are correspondingly set with the side surface of the guide rail body. A plurality of main bearing static pressure oil chambers 3 are set on the bottom surface of the guide rail groove 1 and the main bearing static pressure oil chambers 3 are correspondingly set with the top surface of the guide rail body. Both the static pressure oil chamber components on lateral guide rail 2 and the main bearing static pressure oil chambers 3 are connected to the oil outlet end of the oil supply system through a static pressure oil circuit 6.

The static pressure oil chamber components on lateral guide rail 2 are set on both sides of the guide rail groove 1 to provide better support and location for the workbench. The bearing oil film also can be formed between the guide rail groove 1 and the side surface of the guide rail body to avoid the direct contact between the side surface of the guide rail groove 1 and the side surface of the guide rail body, which makes the guide rail groove 1 and the guide rail body are in the pure liquid friction state, so as to increase the stability, reduce the direction finding error of the workbench when operating, and improve the stability of the machine tool when moving and the machining precision of the workpiece.

The oil supply system can be the existing hydraulic oil pumping system and the output pressure on the static pressure oil chamber components on lateral guide rail 2 and the main bearing static pressure oil chambers 3 can be controlled by adjusting the oil supply system, so as to form an effective balance between the oil pressure and the gravity of the workbench. That is, the bearing oil film can be formed on the contact surface between the guide rail groove 1 and the guide rail body and the relative position of the workbench and the machine tool can be effectively controlled.

The static pressure oil circuit 6 is set in the workbench and a PM flow controller is set between the oil inlet end of the static pressure oil circuit 6 and the oil outlet end of the oil supply system.

By using the PM flow controller instead of the original commonly used capillary restrictor or orifice restrictor, the influence of unstable oil pressure to the operation accuracy of the machine tool is avoided, and at the same time, the pressure reduction caused by long-time use of the capillary restrictor is avoided and the service life of the machine tool is prolonged.

The static pressure oil chamber components on lateral guide rail 2 comprise a plurality of static pressure oil chambers on lateral guide rail 5. The resultant force of the plurality of static pressure oil chambers on lateral guide rail 5 on the side surface of the guide rail body is zero.

By setting the positions of the static pressure oil chambers on lateral guide rail 5 and controlling the area of each static pressure oil chamber on lateral guide rail 5, the resultant force on the side surface of the guide rail body is zero, so as to avoid the shaking of the workbench on the guide rail body to increase the stability.

The width of the guide rail groove 1 is greater than the width of the guide rail body and the depth of the guide rail groove 1 is greater than the height of the guide rail body.

By setting a gap between the guide rail groove 1 and the guide rail body, the bearing oil film can exist and play a role in reducing friction, and at the same time, the gap should not be too large, otherwise the bearing oil film cannot be formed and cannot play its due role.

The distance between two adjacent main bearing static pressure oil chambers 3 is equal and the areas of the plurality of main bearing static pressure oil chambers 3 are equal.

According to the actual situation, the plurality of main bearing oil chambers are distributed on the bottom surface of the guide rail groove 1 to exert a force on the top surface of the guide rail body, so that the gravity of the workbench is equal to the pressure released by the main bearing oil chambers and the direction is opposite, so as to realize the stable fixation of the workbench.

In the present disclosure, the number of the guide rail body and the guide rail groove 1 is at least one respectively, and it means that the number can be one or more. The related embodiments are provided below.

### Embodiment one.

When the number of both the guide rail body and the guide rail groove 1 is one, it's need to set static pressure oil chamber on lateral guide rail 5 on both side surfaces of the guide rail groove 1, so that the resultant force is zero.

### Embodiment two.

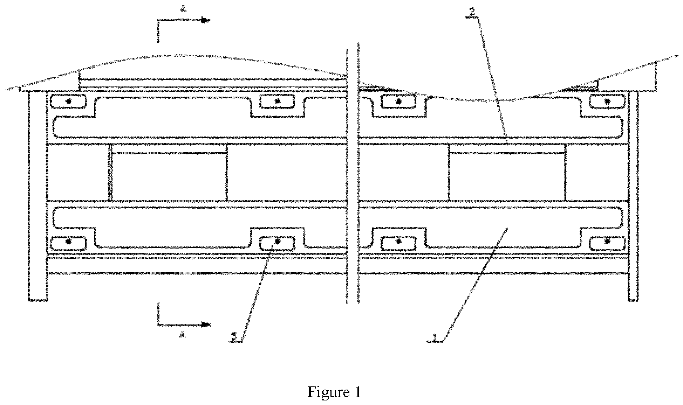

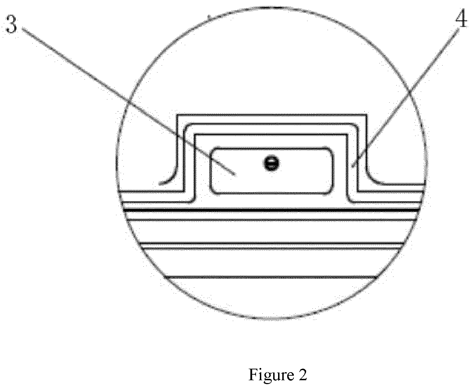

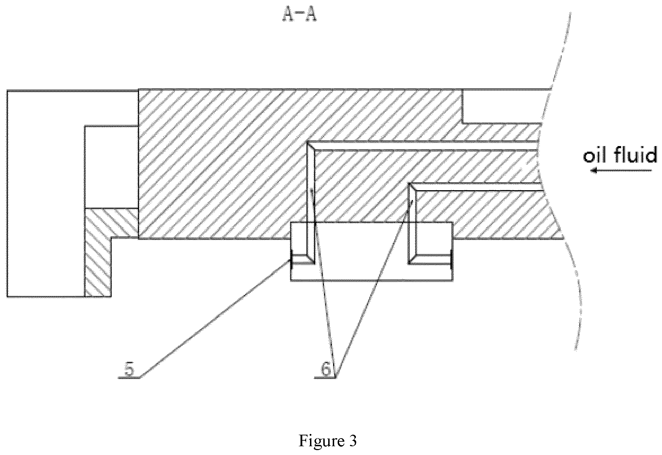

When the number of both the guide rail body and the guide rail groove 1 is two, such as the structures shown in figure 1, figure 2 and figure 3, the static pressure oil chambers on lateral guide rail 5 can be set in the way shown in the figures, that is, the static pressure oil chambers of lateral guide rail 5 are only set on the inner side surfaces of the two guide rail grooves 1 and the inner side surfaces are closing to the axis of the workbench.

The static pressure oil chambers on lateral guide rail 5 can also be set on the inner side surfaces of the two guide rail grooves 1, and the inner side surfaces are away from the workbench. The static pressure oil chambers on lateral guide rail 5 can also be set on the four inner side surfaces of the two guide rail grooves 1.

### Embodiment three.

When the number of the guide rail body and the guide rail groove 1 is multiple, a proper number of inner side surfaces can be selected to set the static pressure oil chambers on lateral guide rail 5, and the only need is that the resultant force is zero.

The negative pressure adsorption and static pressure support guide rail further comprises negative pressure adsorption components. The negative pressure adsorption components are fixedly connected to the workbench and the guide rail body.

The negative pressure adsorption components comprise negative pressure ring groove 4 and negative pressure system. The negative pressure ring groove 4 is fixedly set on the bottom surface of the guide rail groove 1. The negative pressure ring groove 4 is connected to the negative pressure end of the negative pressure system through a gas circuit.

By adding the negative pressure ring groove 44 on the bottom surface of the guide rail groove 11 and making the negative pressure ring groove 44 in a negative pressure state through the negative pressure system, the thickness and rigidity of the bearing oil film required by the open static pressure guide rail are ensured, and at the same time, the problems of drift when moving in high speed and creep when moving in low speed of the static pressure guide rail can be solved and the stability of the machine process tool when moving and the machining precision of the workpiece can be improved.

The negative pressure ring groove 4 is set between the static pressure oil chamber components on lateral guide rail 2 and the main bearing static pressure oil chambers 3, and the negative pressure ring groove 4 near the side surface of the guide rail groove 1 is set on the periphery of the main bearing static pressure oil chambers 3.

The number of the negative pressure ring groove 4 is determined according to the number of the guide rail groove 1. Assuming that the number of the guide rail groove 1 is two, as shown in Figure 1, in order to improve the stability of the machine process tool, the negative pressure ring groove 4 is set into two parts which are respectively located in the upper and lower parts as shown in the figure, so that the negative pressure adsorption can be realized without affecting the work of the static pressure support components.

The present disclosure provides a cylindrical grinder and the cylindrical grinder comprises the above negative pressure adsorption and static pressure support guide rail of machine process tool.

In the description of this specification, the descriptions of the terms "one embodiment/mode", "some embodiments/modes", "examples", "specific examples", or "some examples" means that the specific features, structures, materials, or characteristics described in connection with the embodiment/mode or example are included in at least one embodiment/mode or example of the present application. In this specification, the schematic expression of the above terms does not necessarily refer to the same embodiment/mode or example. Moreover, the specific features, structures, materials, or characteristics described can be combined in any suitable manner in any one or more embodiments/modes or examples. In addition, without contradicting each other, those skilled in the art may combine different embodiments/modes or examples and features of the different embodiments/modes or examples described in this specification.

In addition, the terms "first" and "second" are used for description purposes only, and cannot be understood as indicating or implying relative importance or implicitly indicating the number of technical features indicated. Thus, the features defined as "first" and "second" may include at least one of the features either explicitly or implicitly. In the description of the present application, the meaning of "plurality" is at least two, such as two, three, etc., unless specifically defined otherwise.

Those skilled in the art should understand that the above-mentioned embodiments are only for clearly illustrating the present disclosure, rather than limiting the scope of the present disclosure. For those skilled in the art, other changes or modifications can be made on the basis of the above disclosure, and these changes or modifications are still within the scope of the present disclosure.

## Claims

1. A negative pressure adsorption and static pressure support guide rail of machine process tool, the machine process tool comprises a workbench and a machine tool, **characterized in that**, the negative pressure adsorption and static pressure support guide rail comprises a guide rail body and static pressure support components, the guide rail body is fixedly set on an upper side surface of the machine tool, and a guide rail groove matched with the guide rail body is set on a lower side surface of the workbench; and
the static pressure support components are fixedly connected to the workbench and the guide rail groove is movably connected to the guide rail body through the static pressure support components.

2. The negative pressure adsorption and static pressure support guide rail of machine process tool according to the claim 1, **characterized in that**,
the static pressure support components comprise static pressure oil chamber components on lateral guide rail, main bearing static pressure oil chamber and oil supply system; the static pressure oil chamber components on lateral guide rail are set on a side surface of the guide rail groove and the static pressure oil chamber components on lateral guide rail are correspondingly set with a side surface of the guide rail body; a plurality of main bearing static pressure oil chambers are set on a bottom surface of the guide rail groove and the main bearing static pressure oil chambers are correspondingly set with a top surface of the guide rail body; and both the static pressure oil chamber components on lateral guide rail and the main bearing static pressure oil chambers are connected to an oil outlet end of the oil supply system through a static pressure oil circuit.

3. The negative pressure adsorption and static pressure support guide rail of machine process tool according to the claim 2, **characterized in that**, the static pressure oil circuit is set in the workbench and a PM flow controller is set between an oil inlet end of the static pressure oil circuit and the oil outlet end of the oil supply system.

4. The negative pressure adsorption and static pressure support guide rail of machine process tool according to the claim 2, **characterized in that**, the static pressure oil chamber components on lateral guide rail comprise a plurality of static pressure oil chambers on lateral guide rail and a resultant force of the plurality of static pressure oil chambers on lateral guide rail on the side surface of the guide rail body is zero.

5. The negative pressure adsorption and static pressure support guide rail of machine process tool according to the claim 2, **characterized in that**, a width of the guide rail groove is greater than a width of the guide rail body and a depth of the guide rail groove is greater than a height of the guide rail body.

6. The negative pressure adsorption and static pressure support guide rail of machine process tool according to the claim 4, **characterized in that**, distance between two adjacent main bearing static pressure oil chambers is equal and areas of the plurality of main bearing static pressure oil chambers are equal.

7. The negative pressure adsorption and static pressure support guide rail of machine process tool according to the claim 2, **characterized in that**, the workbench is also provided with negative pressure adsorption components, the negative pressure adsorption components adsorb the guide rail body based on negative pressure, so that a relative movement between the workbench and the guide rail body is stable.

8. The negative pressure adsorption and static pressure support guide rail of machine process tool according to the claim 7, **characterized in that**, the negative pressure adsorption components comprise negative pressure ring groove and negative pressure system, the negative pressure ring groove is fixedly set on the bottom surface of the guide rail groove 1 and the negative pressure ring groove is connected to a negative pressure end of the negative pressure system through a gas circuit.

9. The negative pressure adsorption and static pressure support guide rail of machine process tool according to the claim 8, **characterized in that**, the negative pressure ring groove is set between the static pressure oil chamber components on lateral guide rail and the main bearing static pressure oil chambers, and the negative pressure ring groove near the side surface of the guide rail groove is set on a periphery of the main bearing static pressure oil chambers.

10. A cylindrical grinder, **characterized in that**, comprises the negative pressure adsorption and static pressure support guide rail of machine process tool according to the any one of the claims 1-9.
